# EUROPEAN PATENT APPLICATION

(11) **EP 2 290 881 A2**
(43) Date of publication of application: **02.03.2011**
(21) Application number: 10157492.9
(22) Date of filing: 24.03.2010
(51) Int. Cl.: H04L 12/28

(54) **Control device, control point, and method for controlling friendly name priority order**

(30) Priority: 26.08.2009 KR 20090079142
(71) Applicant: SAMSUNG ELECTRONICS CO., LTD., Suwon-si, Gyeonggi-do (KR)
(72) Inventor: Lee, Jun-seung, Gyeonggi-do (KR); Lee, Sang-hyup, Gyeonggi-do (KR)
(74) Representative: Walaski, Jan Filip

(57) **Abstract**

A control device is provided. The control device includes a storage unit to store a predetermined first prefix, a user interface unit to receive the first friendly name corresponding to the control device, a generation unit to generate the second friendly name using the input first friendly name and the first prefix pre-stored in the control device, a stack unit to generate a device description using the generated second friendly name, and a communication interface unit to transmit the generated device description to the control point.

## Description

One or more exemplary embodiments of the present disclosure relate to a control device, a control point, a method for generating an apparatus description, and a method for sensing a control device, and more particularly, to a control device, a control point, and a method for controlling a friendly name priority order which allows a user to identify a desired apparatus easily by adding a predetermined prefix to a name of a digital living network alliance (DLNA) network apparatus.

The DLNA is a standardization organization for digital information technology products and establishes standards for exchanging data such as music, photograph, and video by connecting digital AV/C apparatuses to personal computers that are linked via a home network.

The DLNA establishes a compatible platform based on already established and publicized standards, and aims to realize convergence between businesses. The DLNA promotes the introduction of a business guideline based on universal plug and play (UPnP), which are widely used among manufacturers of electric home appliances, personal computers, and wireless apparatuses.

UPnP is a representative method for discovering and controlling counterpart apparatuses of information electric apparatus connected to a network.

The number of apparatuses that support the DLNA regulations is increasing, and include not only A/V apparatuses but also other apparatuses such as mobile phones and printers.

However, as the number of apparatus supporting the DLNA increases and apparatus lists which have been discovered are based on a model name or a serial number, a user experiences difficulties in identifying a desired apparatus. In particular, since some apparatuses such as a mobile phone or an image forming apparatus have a small display window, the number of DLNA apparatus that can be displayed on the window is limited. Therefore, it is not easy for the user to discover a desired apparatus. The fact that the user may change a DLNA apparatus, that is, a friendly name of a control device arbitrarily makes it more difficult to discover a desired apparatus. Although manufacturers want their apparatuses to be discovered more often than the apparatuses of their competitors, there has been no method available to make that happen.

One or more exemplary embodiments of the present disclosure relate to a control device, a control point, and a method for controlling a friendly name priority order which allows a user to identify a desired apparatus easily by adding a predetermined prefix to a name of a DLNA network apparatus.

According to an aspect of the present disclosure, there is provided a control device with a control point forming a digital living network alliance (DLNA) network which includes a storage unit to store a predetermined first prefix, a user interface unit to receive a first friendly name corresponding to the control device, a generation unit to generate a second friendly name using the input first friendly name and a first prefix pre-stored in the control device, a stack unit to generate the device description using the generated second friendly name, and a communication interface unit to transmit the generated device description to the control point in response to a request from the control point.

The storage unit may store the first friendly name and the second friendly name.

The first prefix may be at least one of intrinsic information corresponding to the control device, a model name, a manufacturer name, and an icon corresponding to the control device.

A control point with at least one control device forming a DLNA network, according to an exemplary embodiment of the present disclosure, includes a communication interface unit to search the at least one control device connectable to the control point and requests and receives a device description regarding the at least one searched control device, a storage unit to store at least one of a predetermined first prefix and second prefix, a user interface unit to display the searched control device, a stack unit to extract a friendly name from the received device description, a determination unit to determine whether a first prefix is included in the extracted friendly name, and a control unit, if a first prefix is included in a friendly name of the device description, to control the user interface unit to display the control device corresponding to a friendly name with the first prefix distinctively from the control device corresponding to a friendly name without the first prefix.

The control unit may control the user interface unit to perform at least one of displaying the control device corresponding to a friendly name with the first prefix on top of a display list, displaying one of font, font size, and font color of a displayed control device distinctively, and displaying a displayed control device after adding an icon to it.

The control unit may control the user interface unit to display the control device after removing a prefix from the extracted friendly name.

The control unit may control the user interface unit to display the control device after adding a second prefix pre-stored in the control point with reference to the extracted friendly name.

The second prefix may be given by a user or an administrator arbitrarily.

The friendly name is transmitted from the control device and may be at least one of a first friendly name input from the control device and a second friendly name including a pre-stored first prefix.

The determination unit may compare a first prefix pre-stored in a storage unit of the control point with the extracted friendly name.

The first prefix and the second prefix may be at least one of intrinsic information corresponding to the control device, a model name, a manufacturer name, and an icon corresponding to the control device.

A method of controlling a friendly name priority order using a prefix in a DLNA network connectable to a control point and a control device, according to an exemplary embodiment of the present disclosure, includes receiving a first friendly name corresponding to the control device, by the control device, generating a second friendly name using the input first friendly name and a first prefix pre-stored in the control device, generating the device description using the generated second friendly name, and transmitting the generated device description to the control point in response to a request from the control point.

The method may further include storing the first friendly name and the second friendly name.

The first prefix may be at least one of intrinsic information corresponding to the control device, a model name, a manufacturer name, and an icon corresponding to the control device.

A method of controlling a friendly name priority order using a prefix in a DLNA network connectable to a control point and at least one control device, according to an exemplary embodiment of the present disclosure, includes searching at least one control device connectable to the control point, requesting and receiving a device description with regard to the at least one searched control device, extracting a friendly name from the received device description, determining whether a first prefix is included in the extracted friendly name, and displaying the control device corresponding to a friendly name with the first prefix distinctively from the control device corresponding to a friendly name without the first prefix if a first prefix is included in a friendly name of the device description.

The displaying may be at least one of displaying the control device corresponding to a friendly name with the first prefix on top of a display list, displaying one of font, font size, and font color of a displayed control device distinctively, and displaying a displayed control device after adding an icon to it.

The displaying may display the control device after removing a prefix from the extracted friendly name.

The displaying may display the control device after adding a second prefix pre-stored in the control point with reference to the extracted friendly name.

The second prefix may be given by a user or an administrator arbitrarily.

The friendly name is transmitted from the control device and may be at least one of a first friendly name input from the control device and a second friendly name including a pre-stored first prefix.

The determining may compare a first prefix pre-stored in a storage unit of the control point with the extracted friendly name.

Additional aspects and/or advantages of the invention will be set forth in part in the description which follows and, in part, will be obvious from the description, or may be learned by practice of the invention.

These and/or other aspects and advantages of the disclosure will become apparent and more readily appreciated from the following description of the embodiments, taken in conjunction with the accompanying drawings, of which:
FIG. 1 is a block diagram illustrating the structure of a DLNA network system according to an exemplary embodiment of the present disclosure;
FIG. 2 to FIG. 4 are views illustrating various examples of a user interface window in a control point;
FIG. 5 is a flow chart provided to explain a method for controlling friendly name priority order using a prefix in a control device according to an exemplary embodiment of the present disclosure; and
FIG. 6 is a flow chart provided to explain a method for controlling friendly name priority order using a prefix in a control point according to an exemplary embodiment of the present disclosure.

Reference will now be made in detail to exemplary embodiments of the present disclosure, examples of which are illustrated in the accompanying drawings, wherein like reference numerals refer to like elements throughout. Embodiments are described below, in order to explain the present disclosure by referring to the figures.

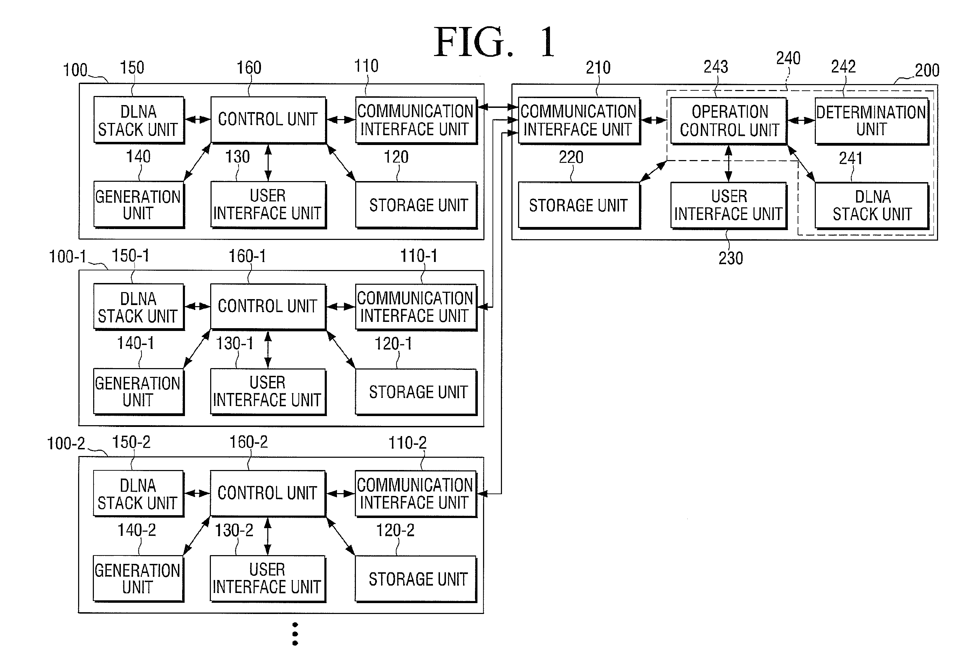

FIG. 1 is a block diagram illustrating a DLNA network system according to an exemplary embodiment of the present disclosure. Referring to FIG. 1, the DLNA network system 1000 comprises at least one DLNA apparatus 100, 100-1, 100-2,... and a control point 200. The at least one DLNA apparatus 100, 100-1, 100-2,... and the control point 200 are connected by wire or wirelessly through a DLNA network. Hereinafter, the DLNA apparatus 100 will be represented as a control device 100. Furthermore, any network described in herein may equally be a wired or a wireless network.

The control device 100 is an apparatus which can share contents by connecting to other control devices or a control point on a DLNA network. For instance, the control device may be one of a digital media printer (DMPr), a digital media server (DMS), a digital media player (DMP), and a digital media renderer (DMR) which are stipulated, e.g., in a DLNA guideline.

Specifically, the control device 100 may include, for example, a communication interface unit 110, a storage unit 120, a user interface unit 130, a generation unit 140, a DLNA stack unit 150, and a control unit 160.

The communication interface unit 110 may be connected to other control devices or the control point 200 using a DLNA network, and may transmit a device description generated by the DLNA stack unit 150 corresponding to a request of the control point 200, to the control point 200 connected to the DLNA network.

Specifically, the communication interface unit 110 is formed to connect the control device 100 to other external apparatus on the DLNA network, and may be formed as a parallel port, a universal serial bus (USB) a wireless module or any other similar communication interface.

The storage unit 120 stores a predetermined first prefix. The storage unit 120 may store a device description generated by the DLNA stack unit 150, which will be explained later, and may store contents pre-stored in the control device 100 and contents received from the communication interface unit 110. In addition, the storage unit 120 may store the first friendly name (name) and the second friendly name (apparatus name). The first friendly name is the name of the control device 100 that a user inputs through the user interface unit 130, and the second friendly name is the first friendly name generated by the generation unit 140 to which the first prefix is added. The generation unit 140 will be explained later in greater detail. Friendly can alternatively be referred to as 'informal'.

The storage unit 120 may be realized not only as a storage medium in the control device 100 but also equally as a removable disk such as a USB memory and a web server via a network.

The prefix may include at least one of intrinsic information corresponding to the control device 100, a model name, a manufacturer name (the abbreviation of a manufacturer name), and an icon corresponding to the control device 100, which makes it easier to identify the control device. For instance, 'SEC_' may be set as a prefix, and 'Printer_', 'SEC_P_', 'TV_', or 'SEC_TV_' may be set as a prefix using the type of control device during implementation. The first prefix is a prefix commonly known to the control device 100 and the control pointer 200, and the second prefix is a prefix to distinctively display a friendly name including the first prefix by the control point 200. For instance, the second prefix may be an icon corresponding to intrinsic information, a model name, a manufacturer name, or a control device, and may be provided arbitrarily by, e.g., a user or an administrator.

The user interface unit 130 includes a plurality of function keys which allow a user to set or select various functions supported by the control device 100, and displays various information provided by the control device 100. The user interface unit 130 may be realized as an apparatus like a touch pad, which is capable of inputting and outputting data simultaneously, or may be realized as an apparatus which combines a mouse and monitor. Accordingly, a user may input the first friendly name (name) of the control device 100 via the user interface unit 130.

The generation unit 140 may generate the second friendly name (apparatus name) of the control device by adding a pre-stored first prefix to the input first friendly name (name). Specifically, the generation unit 140 may generate the second friendly name (apparatus name) of the control device 100 by adding a prefix pre-stored in the storage unit 120 to the front end of the first friendly name (name) of the control device 100 input by a user through the user interface 130. For instance, if the first friendly name (name) of the control device input by the user is 'abcdef' and a pre-stored prefix is 'SEC_', the generation unit 140 may generate the second friendly name (apparatus name) of 'SEC_abcdef'. The prefix may be added to the back end or the middle of the first friendly name (name) input by the user interface unit 130 during implementation. In addition, a friendly name (name) of the control device may not be input by the user, and the first friendly name (name) of a pre-stored control device and a default friendly name (name) may be used to perform the operation.

The DLNA stack unit 150 may generate a device description of the control device using the generated second friendly name (apparatus name). The device description is a file including various information of the control device 100 such as the second friendly name (apparatus name) of the apparatus and an IP address. Specifically, the DLNA stack unit 150 may generate a device description by reflecting the second friendly name (apparatus name) generated by the generation unit 140 on 'FriendlyName' which is one item of the device description.

If a control point 200 connected to the DLNA network requests the device description, the control unit 160 may control the communication interface unit 110 to transmit the device description generated by the DLNA stack unit 150 to the control point 200 connected to the DLNA network.

Accordingly, even if a user inputs the first friendly name (name) of a control device in an unrecognizable form, the control device 100 generates the second friendly name (apparatus name) by adding a prefix to the first friendly name (name) input by the user. Therefore, other control devices or control points may identify the control device more easily.

The control point 200 represents an apparatus which controls a UPnP device defined by the UPnP, and, for instance, may be a DMPr in a DLNA guideline. Specifically, the control point 200 may include a communication interface unit 210, a storage unit 220, a user interface unit 230, a control unit 240, a DLNA stack unit 241, a determination unit 242, and an operation control unit 243.

The communication interface unit 210 may search the control device 100 connected to the DLNA network and receive a device description regarding the searched control device. Specifically, the communication interface unit 210 may search the control device connected to the DLNA network in order to share contents with the control device 100 connected to the DLNA network, and may request the device description of the apparatus of the searched control device 100. In addition, the communication interface unit 210 may receive a device description from the control device 100. The communication interface unit 210 may be formed as a wireless or wired network module.

The storage unit 220 may store a predetermined first prefix and second prefix. Specifically, the storage unit 220 may store the first prefix which is the same as the prefix stored in the control device 100 and the second prefix which distinctively displays a friendly name including the first prefix. In addition, the storage unit 220 may temporarily store the device description of the control device 100 received through the communication interface unit 210, and store contents pre-stored in the control point 200 and various contents received from the communication interface unit 210. The storage unit 220 may be realized not only as a storage medium incorporated in the control point 200 but also as a removable disk such as a USB memory or a web server via a network. During implementation, the storage unit 220 may store the prefix of various manufacturers as well as the prefix of a single manufacturer.

The user interface unit 230 includes a plurality of function keys which allow a user to set or select various functions supported by the control point 200 and displays various information provided by the control point 200. The user interface unit 230 may be realized as an apparatus like a touch pad, which is capable of inputting and outputting data simultaneously, or may be realized as an apparatus which combines a mouse and monitor. A user may search a control device to share contents using a user interface window provided through the user interface unit 230. In addition, the user interface unit 230 may display the searched control devices on the DLNA network in a list, and the user may select one control device from among the displayed control devices using the displayed user interface window.

The stack unit 241 extracts a friendly name from the received device description. Specifically, the DLNA stack unit 241 may receive a device description received through the communication interface unit 210 and extract the second friendly name (apparatus name) or the first friendly name (name) from the "FriendlyName" area of the device description. As described above, the second friendly name (apparatus name) includes the first friendly name (name) along with an added prefix. For instance, if the current control point 200 is connected to the control device 100 of the present disclosure, the DLNA stack unit 241 extracts the second friendly name (apparatus name) to which a prefix is added from the "FriendlvName" area of the device description, and if the control point 200 is connected to a conventional control device, the DLNA stack unit 241 extracts the first friendly name (name) of the control device which does not include a prefix from the "FriendlyName" area of the device description.

The determination unit 242 determines whether the prefix is included in the extracted friendly name. Specifically, the determination unit 242 may identify whether the control device has been produced by the same manufacturer by determining whether the prefix is included in the second friendly name (apparatus name) or the first friendly name (name) extracted by the DLNA stack unit 241. For instance, if the control point 200 is connected to the control device 100 of the present disclosure, the second friendly name (apparatus name) to which the prefix is added would be included in the "FriendlyName" area of the device description. Therefore, it can be seen that the control device 100 is produced by the same manufacturer which produced the control point 200. On the contrary, if the control point 200 is connected to the conventional control device 100, there would be no prefix in the "FriendlyName" area of the device description. Therefore, it can be seen that the control device 100 is a general apparatus. In addition, the determination unit 242 may make the determination based on the first prefix pre-stored in the storage unit 220 of the control point 200.

The determination unit 242 may identify a plurality of manufacturers. Specifically, if a prefix for each manufacturer is included in the storage unit 220, the determination unit 242 may identify whether the prefix is included and which manufacturer produced the prefix.

If the first prefix is included in the friendly name of the device description, the operation control unit 243 controls the user interface unit 230 to display the control device corresponding to the friendly name with the first prefix distinctively from the control device corresponding to the friendly name without the first prefix.

Specifically, if the determination unit 242 determines that a prefix is included, the operation control unit 243 may control the user interface unit 210 to distinctively display the first friendly name (name) of the control device 100. Specifically, if the determination unit 242 determines that a prefix is included, the operation control unit 243 may control the user interface unit 230 to display the first friendly name (name) of the control device 100 on top of the list of the searched control devices by removing the prefix from the apparatus name extracted from the DLNA stack unit 241.

The operation control unit 243 may control the user interface unit 230 to perform image processing on the first friendly name (name) of the control device including a prefix and display the first friendly name including the prefix. Specifically, the operation control unit 243 may control the user interface unit 230 to display at least one of the first display which displays the control device corresponding to the friendly name including the first prefix on top of the display list, the second display which displays one of font, font size, and font color of the displayed control device distinctively, and the third display which displays the control device after adding an icon to the displayed control device, and etc. The displayed icon may be a manufacturer logo of the control device. In the above description, various image processing are performed after the prefix is removed, but this is only an example. The image processing may be performed while the prefix is not removed.

The operation control unit 243 may control the user interface unit 230 to display the control device after removing a prefix from the extracted friendly name. In addition, the operation control unit 243 may control the user interface unit 230 to add a pre-stored second prefix corresponding to a prefix removed from the friendly name to the friendly name and display it. Unlike the first prefix, the second prefix may be given arbitrarily by a user or an administrator. The friendly name is transmitted from the control device 100, and may be at least one of the first friendly name input from the control device 100 and the second friendly name including the pre-stored first prefix.

Accordingly, a user may easily search a control device which is manufactured by the same manufacturer as that of the currently used control point from among the control devices searched on the DLNA network. In the preceding exemplary embodiments of the present disclosure, the control device 100 and the control point 200 may be an image forming apparatus whose function includes at least one of printing, copying, faxing, and scanning.

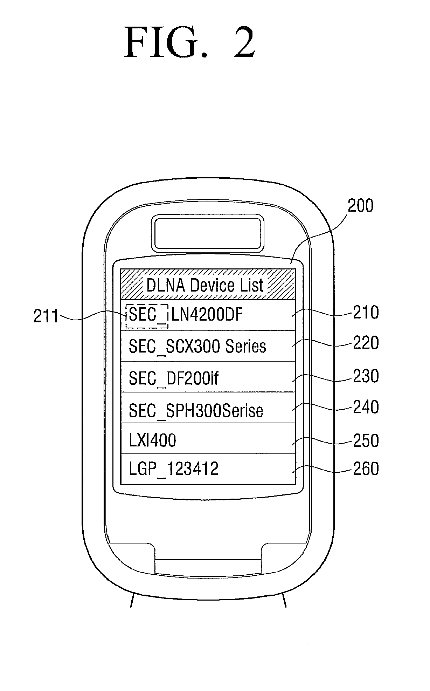

FIG. 2 to FIG. 4 are views illustrating a user interface window which can be displayed in the control point 200.

Referring to FIG. 2, UI window 200 is a user interface window that is displayed in a conventional control point when the control device 100 of the present disclosure is searched in the conventional control point.

In the exemplary embodiment, the control point searched 6 control devices, and the UI window 200 displays the first friendly name (name) 210∼260 of the 6 control devices. Among the searched apparatuses, 'SEC_LN4200DF' 210, 'SEC_SCX300 Series' 220, 'SEC_DF200if' 230, and 'SEC_SPH300Serise' 240 each commonly include 'SEC_'211.

The 'SEC_' 211 in items 210∼240 is a prefix indicating that the products are manufactured by the same manufacturer. Accordingly, it can be seen from the prefix that the 4 control devices are manufactured by the same manufacturer.

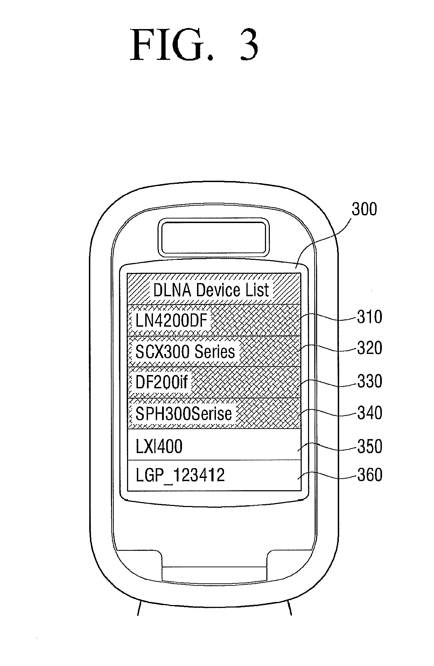

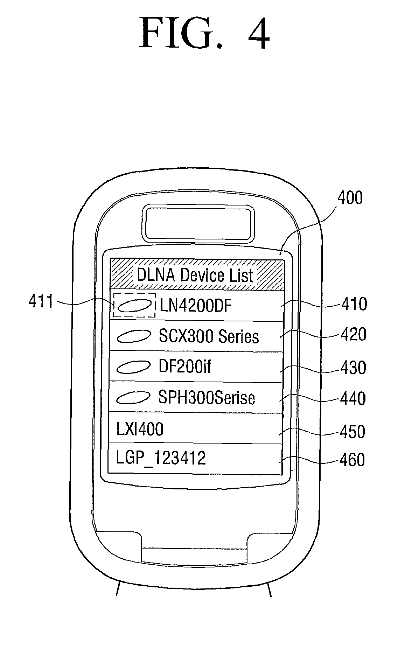

FIG. 3 and FIG. 4 are views illustrating a user interface window displayed in the control point according to an exemplary embodiment of the present disclosure. In the exemplary embodiment, 6 control devices are searched as in FIG. 2, and UI windows 300 and 400 display the first friendly name (name) of the 6 searched control devices. Among the searched apparatuses, the images of 'LN4200DF', 'SCX300 Series', 'DF200if, and 'SPH300Serise' are specially processed. Specifically, referring to the UI window 300 in FIG. 3, the colors of 'LN4200DF' 310, 'SCX300 Series' 320, 'DF200if 330, and 'SPH300Serise' 340 are different from those of 'LXI400' 350, 'LGP_123412' 360. In addition, referring to the UI window 400 in FIG. 4, an icon 411 is added to the front of 'LN4200DF' 410, 'SCX300 Series' 420, 'DF200if 430, and 'SPH300Serise' 430. The icon is added to the front of the first friendly name (name). Accordingly, a user may see that the 'LN4200DF' 310, 410, 'SCX300 Series' 320, 420, 'DF200if 330, 430, and 'SPH300Serise' 340, 440 are control devices manufactured by the same manufacturer.

In FIG. 3 and FIG. 4, only one image processing is illustrated in each figure, but the image processing in FIG. 3 and FIG. 4 may be combined with each other, and other image processing may be displayed.

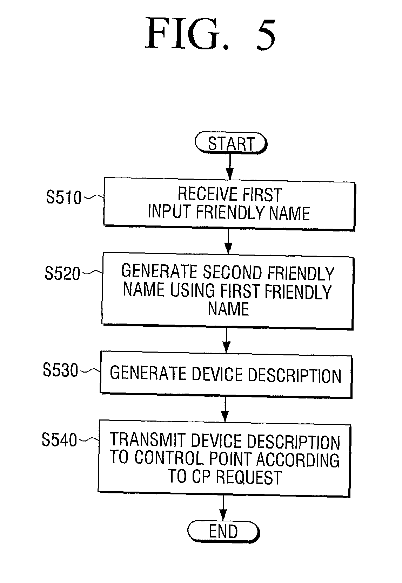

FIG. 5 is a flow chart provided to explain a method for controlling friendly name priority order using a prefix in a control device according to an exemplary embodiment of the present disclosure.

Referring to FIG. 5, a user inputs the first friendly name corresponding to the control device (S510). The second friendly name (apparatus name) of the control device may be generated using the input first friendly name (name) and the first prefix pre-stored in the control device (S520). Specifically, the second friendly name (apparatus name) of the control device 100 may be generated by adding the pre-stored first prefix to the front of the first friendly name (name) of the control device 100 input by the user.

The device description of the control device may be generated using the generated second friendly name (apparatus name) (S530). Specifically, the device description may be generated by adding the generated second friendly name (apparatus name) to 'FriendlyName' which is one item of the device description.

The generated device description may be transmitted to the control point connected to the DLNA network (S540). Specifically, if the control point connected to the DLNA network requests the device description, the generated device description may be transmitted to the control point 200 connected to the DLNA network.

During implementation, a friendly name (name) of the control device may not be input by the user, and the first friendly name (name) of a pre-stored control device and a default friendly name (name) may be used to perform the operation. The method for processing the device description in FIG. 5 may be performed not only in the control device 100 having the structure of FIG. 1 but also in an image forming apparatus having other structures.

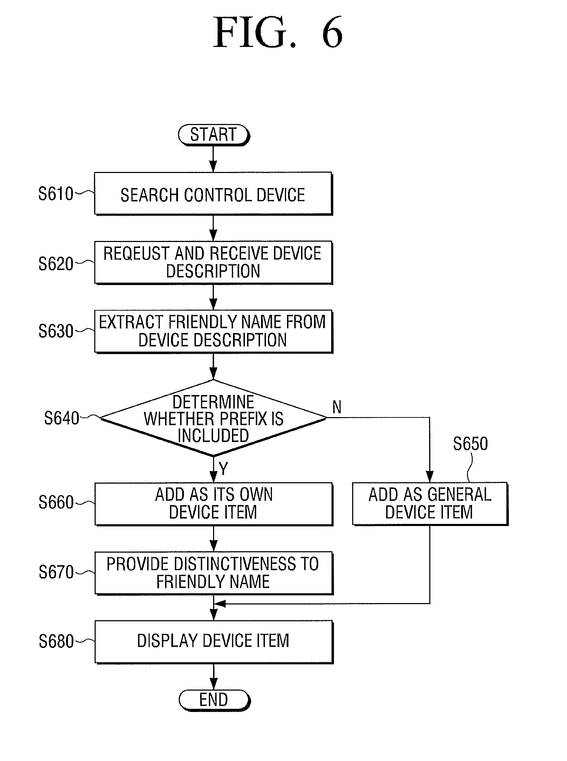

FIG. 6 is a flow chart provided to explain a method for controlling friendly name priority order using a prefix in a control point according to an exemplary embodiment of the present disclosure.

Referring to FIG. 6, once a user inputs a control device command, at least one control device connectable to the control point may be searched (S610). A device description regarding the searched control device is requested, and the device description regarding the searched control device may be received (S620).

The second friendly name (apparatus name) of the control device is extracted from the received device description (S630). The DLNA stack unit 241 receives the received device description and may extract the second friendly name (apparatus name) or the first friendly name (name) from the "FriendlyName" area of the device description. The second friendly name (apparatus name) is the name to which the first prefix is added as described in the preceding text. For instance, if the current control point 200 is connected to the control device 100 of the present disclosure, the second friendly name (apparatus name) to which the first prefix is added will be extracted, and if the control point 200 is connected to a conventional control device, the first friendly name (name) of the control device to which the first prefix is not added will be extracted.

It is determined whether the pre-stored first prefix is included in the extracted second friendly name (apparatus name) (S640). Specifically, by determining whether the first prefix is included in the extracted second friendly name (apparatus name) or the first friendly name (name), it may be identified whether the control device is manufactured by the same manufacturer. For instance, if the control point 200 is connected to the control device 100 of the present disclosure, the second friendly name (apparatus name) to which the prefix is added would be included in the "FriendlvName" area of the device description. Therefore, it can be seen that the control device 100 is produced by the same manufacturer which produced the control point 200. On the contrary, if the control point 200 is connected to a conventional control device, there would be no prefix in the "FriendlyName" area of the device description. Therefore, it can be determined that the control device 100 is a general device.

If the first prefix in included in the second friendly name (apparatus name), the first friendly name (name) of the control device may be distinctively displayed.

Specifically, if the second friendly name (apparatus name) is included in the 'FriendlyName' item of the device description (that is, the first prefix is included), it is determined that the control device is an apparatus produced by the same manufacturer of the control device (S660) and the name of the control device including the first prefix is image-processed to be distinctively displayed (S670) before being displayed (S680). The image processing may be changing a font or color, or adding a pre-stored icon. Since the detailed operation regarding the image processing has been provided with reference to FIG. 1 to FIG. 4, further description will be omitted.

If the first prefix is not included in the first friendly name (name) extracted from the device description, it is determined that that the control device is not an apparatus produced by the same manufacturer of the control device. The control device is added as a general apparatus (S650) and may be displayed on a UI window without separate image processing.

Accordingly, a user may easily search a control device which is manufactured by the same manufacturer of the current control point from among the control devices searched on the DLNA network. The method for sensing a control device according to the above-described embodiments be performed not only in the control point 200 having the structure illustrated in FIG. 1, but also in an apparatus having other structures.

In addition, the method for sensing a control device for and the method for controlling friendly name priority order according to the above-described embodiments may be recorded in computer-readable media or processor-readable media including program instructions to implement various operations embodied by a computer or processor. The media may also include, alone or in combination with the program instructions, data files, data structures, and the like.

Examples of computer-readable media or processor-readable media include: magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer or processor using an interpreter.

The described hardware devices may also be configured to act as one or more software modules in order to perform the operations of the above-described embodiments, or vice versa. The methods according to the above-described embodiments may be executed on a general purpose computer or processor or may be executed on a particular machine such as the control device described herein.

Although a few embodiments of the present disclosure have been shown and described, it would be appreciated by those skilled in the art that changes may be made in this embodiment without departing from the principles and spirit of the disclosure, the scope of which is defined in the claims and their equivalents.

## Claims

1. A control device with a control point forming a digital living network alliance (DLNA) network, comprising:
a storage unit to store a predetermined first prefix;
a user interface unit to receive an input first friendly name corresponding to the control device;
a generation unit to generate a second friendly name using the input first friendly name and the first prefix stored in the control device;
a stack unit to generate the device description using the generated second friendly name; and
a communication interface unit to transmit the generated device description to the control point in response to a request from the control point.

2. The control device according to claim 1, wherein the first prefix is at least one of:
intrinsic information corresponding to the control device;
a model name;
a manufacturer name; and
an icon corresponding to the control device.

3. A control point with at least one control device forming a DLNA network, comprising:
a communication interface unit to search the at least one control device connectable to the control point and to request and receive a device description regarding the at least one searched control device;
a storage unit to store at least one of a predetermined first prefix and second prefix;
a user interface unit to display the searched control device;
a stack unit to extract a friendly name from the received device description;
a determination unit to determine whether a first prefix is included in the extracted friendly name; and
a control unit, if a first prefix is included in a friendly name of the device description, to control the user interface unit to display the control device corresponding to a friendly name with the first prefix distinctively from a control device corresponding to a friendly name without the first prefix.

4. The control point according to claim 3, wherein the control unit controls the user interface unit to perform at least one of:
displaying the control device corresponding to the friendly name with the first prefix on top of a display list;
displaying one of font, font size, and font color of a displayed control device distinctively; and
displaying a displayed control device after adding an icon to it.

5. The control point according to claim 3 or claim 4, wherein the control unit controls the user interface unit to display the control device after removing a prefix from the extracted friendly name.

6. The control point according to one of claims 3 to 5, wherein the control unit controls the user interface unit to display the control device after adding a second prefix pre-stored in the control point with reference to the extracted friendly name.

7. The control point according to one of claims 3 to 6, wherein the friendly name is transmitted from the control device and is at least one of a first friendly name input from the control device and a second friendly name including a pre-stored first prefix.

8. The control point according to one of claims 3 to 7, wherein the first prefix and the second prefix is at least one of intrinsic information corresponding to the control device, a model name, a manufacturer name, and an icon corresponding to the control device.

9. A method of controlling a friendly name priority order using a prefix in a DLNA network connectable to a control point and a control device, comprising:
receiving an input first friendly name corresponding to the control device, by the control device;
generating a second friendly name using the input first friendly name and a first prefix pre-stored in the control device;
generating the device description using the generated second friendly name; and
transmitting the generated device description to the control point in response to a request from the control point.

10. The method according to claim 9, wherein the first prefix is at least one of:
intrinsic information corresponding to the control device;
a model name;
a manufacturer name; and
an icon corresponding to the control device.

11. A method of controlling a friendly name priority order using a prefix in a DLNA network connectable to a control point and at least one control device, comprising:
searching at least one control device connectable to the control point;
requesting and receiving a device description with regard to the at least one searched control device;
extracting a friendly name from the received device description;
determining whether a first prefix is included in the extracted friendly name; and
displaying the control device corresponding to a friendly name with the first prefix distinctively from a control device corresponding to a friendly name without the first prefix if a first prefix is included in a friendly name of the device description.

12. The method according to claim 11, wherein the displaying is at least one of:
displaying the control device corresponding to a friendly name with the first prefix on top of a display list;
displaying one of font, font size, and font color of a displayed control device distinctively; and
displaying a displayed control device after adding an icon to it.

13. The method according to claim 11 or claim 12, wherein the displaying displays the control device after removing a prefix from the extracted friendly name.

14. The method according to claim one of claims 11 to 13, wherein the displaying displays the control device after adding a second prefix pre-stored in the control point with reference to the extracted friendly name.

15. The method according to one of claims 11 to 14, wherein the friendly name is transmitted from the control device and is at least one of a first friendly name input from the control device and a second friendly name including a pre-stored first prefix.
